(19) Europäisches Patentamt European Patent Office Office européen des brevets

(11) **EP 1 673 912 B1**

(12) **EUROPÄISCHE PATENTSCHRIFT**

(45) Veröffentlichungstag und Bekanntmachung des Hinweises auf die Patenterteilung:
**07.02.2007 Patentblatt 2007/06**

(21) Anmeldenummer: **04789994.3**

(22) Anmeldetag: **15.10.2004**

(51) Int Cl.:
**H04L 25/02** (2006.01)

(86) Internationale Anmeldenummer:
**PCT/DE2004/002292**

(87) Internationale Veröffentlichungsnummer:
**WO 2005/041507 (06.05.2005 Gazette 2005/18)**

(54) **VERFAHREN ZUR KANALSCHÄTZUNG BEI VERWENDUNG VERSCHIEDENER MODULATIONSVERFAHREN INNERHALB EINES SIGNALINTERVALLS**

METHOD FOR A CHANNEL ASSESSMENT DURING THE USE OF DIFFERENT MODULATION METHODS WITHIN AN INTERVAL OF SIGNALS

PROCEDE D'EVALUATION DU CANAL LORS DE L'UTILISATION DE DIFFERENTS PROCEDES DE MODULATION DANS UN INTERVALLE DE TEMPS DE SIGNAUX

(84) Benannte Vertragsstaaten:
**FR GB**

(30) Priorität: **16.10.2003 DE 10348205**

(43) Veröffentlichungstag der Anmeldung:
**28.06.2006 Patentblatt 2006/26**

(73) Patentinhaber: **Infineon Technologies AG 81669 München (DE)**

(72) Erfinder:
- **HAMMES, Markus 46539 Dinslaken (DE)**
- **NEUBAUER, André 47807 Krefeld (DE)**
- **SPETH, Michael 47803 Krefeld (DE)**

(74) Vertreter: **Patentanwälte Lambsdorff & Lange Dingolfinger Strasse 6 81673 München (DE)**

(56) Entgegenhaltungen:
**GB-A- 2 354 676          US-A1- 2001 022 805
US-B1- 6 269 131**

- **"Digital cellular telecommunications system (Phase 2+); Modulation (3GPP TS 45.004 version 5.1.0 Release 5); ETSI TS 145 004" ETSI STANDARDS, EUROPEAN TELECOMMUNICATIONS STANDARDS INSTITUTE, SOPHIA-ANTIPO, FR, Bd. 3-G1, Nr. V510, Juni 2002 (2002-06), XP014010666 ISSN: 0000-0001**

**EP 1 673 912 B1**

**Beschreibung**

Der Erfindung betrifft ein Verfahren zur Bestimmung von Kanalparametern in einem Mobilfunkempfänger bezüglich eines zweiten Teils eines Signalintervalls, welches einen mit einem ersten Modulationsverfahren modulierten ersten Teil des Signalintervalls und den mit einem zweiten Modulationsverfahren modulierten zweiten Teil des Signalintervalls umfasst.

Gegenwärtig werden bei digitalen schnurlosen Kommunikationssystemen, die auf dem Bluetooth-Standard Version 1.1 basieren, Daten standardmäßig mit Raten von 1 Mbit/s übertragen. Dabei wird ein zweiwertiges GFSK-Modulationsverfahren (Gaussian Frequency Shift Keying) verwendet. Das GFSK-Modulationsverfahren ist ein Frequenzumtastendes Modulationsverfahren (FSK - Frequency Shift Keying). Bei der GFSKbasierten Modulation wird darüber hinaus sendeseitig ein Gauß-Filter zur Begrenzung der Frequenzbandbreite eingesetzt. Ein solcher Filter bewirkt eine Pulsformung der Frequenz- bzw. Datenpulse, wobei sich der Puls pro Symbol zeitlich über mehr als nur die Symbolzeitdauer T erstreckt.

Eine Möglichkeit, um höhere Datenübertragungsraten zu erzielen, besteht in der Verwendung höherwertiger Modulationsverfahren wie zum Beispiel das vierwertige DQPSK-Verfahren (Differential Quadratur Phase Shift Keying) oder allgemein das DMPSK-Verfahren, bei dem anstelle eines zweiwertigen Bits ein M-wertiges Symbol mit $M \geq 4$ übertragen wird. Für zukünftige Versionen des Bluetooth-Standards (möglicherweise bereits ab Version 1.2, spätestens ab Version 2.0) ist eine Erhöhung der Datenrate über die Verwendung eines höherwertigen Modulationsverfahrens geplant.

Um bei standardisierten digitalen Funkübertragungssystemen eine Erhöhung der Datenrate bei neueren Versionen eines Standards zu bewirken, ist es sinnvoll, von einem niederwertigen (z. B. GFSK) zu einem höherwertigen (z. B. DQPSK) Modulationsverfahren nach einer gewissen Dauer der Funkverbindung umzuschalten. Dies ermöglicht eine Abwärtskompatibilität der neuen Version des Standards zu den früheren Versionen des Standards. Ein Verbindungsaufbau oder ein Einrichten eines sogenannten Piko-Netzes im Fall des Bluetooth-Standards kann dabei zunächst mit dem für alle Geräte des Standards verwendeten niederwertigen Modulationsverfahren vorgenommen werden. Sind beide Geräte einer eingerichteten Verbindung bzw. Piko-Netzes auf eine höherwertige Modulation ausgelegt, kann diese bei der nachfolgenden Datenübertragung verwendet werden. Generell wird in digitalen TDMA-basierten (Time Division Multiple Access) Mobilfunksystemen die Information in Form eines zeitlich definierten Datenbursts abgestrahlt. Bei paket-orientierten Mobilfunksystemen erstreckt sich ein zu übertragendes Datenpaket über ein oder mehrere Datenbursts. Ein Datenburst umfasst einen ersten Datenburstkopf oder Datenpaketkopf (Header). Der Header enthält notwendige Informationen zur Adressierung der Gegenstelle sowie zur Angabe des Pakettyps und sollte daher aus Kompatibilitätsgründen für alle Versionen des Standards mit einem niederwertigen Modulationsverfahren übertragen werden. Insbesondere ist es auch denkbar, dass der Header der jeweiligen Gegenstelle anzeigt, dass auf ein zweites, höherwertiges Modulationsverfahren umgeschaltet werden soll. Ein Umschalten hin zu einem höherwertigen Modulationsverfahren erfolgt dann erst in einem zweiten Teil des Datenbursts. Werden mehrere Datenpakete hintereinander versendet, wird so das Modulationsverfahren mehrmals alternierend umgeschaltet.

Zur empfängerseitigen Rückgewinnung der höherwertig modulierten Daten des zweiten Teils eines Bursts bietet es sich aufgrund einhergehender höherer Störempfindlichkeit grundsätzlich an, Verfahren zu verwenden, welche eine Kanalschätzung erfordern. Ziel einer Kanalschätzung ist die Angabe von Kanalparametern, welche das Übertragungsverhalten des Kanals beschreiben. Dabei umfassen die Kanalparameter die Einflüsse der Luftschnittstelle, welche häufig eine Frequenzselektivität und eine Mehrwegeausbreitung aufweist. Darüber hinaus ist es möglich, die Einflüsse von Sende- und/oder Empfangskomponenten in der Kanalschätzung zu berücksichtigen. Diese sind häufig abhängig von der verwendeten Modulationsart. Ferner werden die Kanalparameter auch durch Temperatureffekte, Alterung oder Bauteiltoleranzen der analogen Empfangskomponenten (Frontend) beeinflusst.

Zur Kanalschätzung wird meist ein empfangenes Signal einer Trainingssequenz mit einem empfängerseitig bekannten Referenzsignal verglichen. Die erzielbare Schätzgenauigkeit der Kanalschätzung und damit auch die Leistungsfähigkeit des Empfängers erhöht sich in der Regel mit der Anzahl der bekannten Datenelemente.

Bei zukünftigen Versionen des Bluetooth-Standards ist es vorgesehen, in dem höhermodulierten zweiten Teil eines Datenbursts eine Trainingssequenz zur Kanalschätzung vorzusehen. Allerdings ist die Anzahl der Symbole dieser Trainingssequenz relativ gering, so dass die erzielbare Schätzgenauigkeit der auf der Basis dieser Trainingssequenz bestimmten Kanalparameter zu gering sein kann.

US 2001/022805 A1 offenbart ein drahtloses Übertragungsverfahren, bei dem neben QAM auch GFSK eingesetzt wird.

GB 2 354 676 A offenbart einen iterativen Turbo-Equalizer.

US 6,269,131 B1 offenbart einen Kanalschätzer, bei dem der Equalizer ein Modell des Systems verwendet.

"Digital cellular telecommunications system (Phase 2+); Modulation (3GPP TS 45.004 version 5.1.0 Release 5); ETSI TS 145 004" beschreibt ein Modulationsverfahren eines ETSI-Telekommunikationssystems.

Daher liegt der Erfindung die Aufgabe zugrunde, ein hinreichend genau arbeitendes Verfahren zur Bestimmung von Kanalparametern anzugeben, welche sich, nachdem ein Modulationswechsel innerhalb eines Signalintervalls aufgetreten ist, auf einen mit einem zweiten Modulationsverfahren modulierten zweiten Teil des Signalintervalls beziehen.

Die der Erfindung zugrunde liegende Aufgabenstellung wird durch die Merkmale des Anspruchs 1 gelöst.

Das erfindungsgemäße Verfahren geht dabei von einem Signalintervall aus, welches einen mit einem ersten Modulationsverfahren modulierten ersten Teil des Signalintervalls und einen mit einem zweiten Modulationsverfahren modulierten zweiten Teil des Signalintervalls umfasst. Die Kanalparameter bezüglich des mit dem zweiten Modulationsverfahren modulierten zweiten Teils des Signalintervalls werden erfindungsgemäß unter Verwendung eines empfangenen Datensignals aus dem ersten Teil des Signalintervalls ermittelt.

Verfahren zur Kanalschätzung arbeiten grundsätzlich, wie allgemein bekannt, mit empfängerseitigen Referenzdaten, welche mit dem empfangenen Signal verglichen werden. Das dem empfangenen Datensignal zugeordnete Referenzsignal kann eine bereits im Empfänger bekannte, insbesondere abgespeicherte Dateninformation oder auch eine durch Prozessierung des empfangenen Signals entstandene Information darstellen. Werden Referenzinformationen ohne empfängerseitig bekannte Dateninformation bestimmt, so spricht man auch von sogenannter Blind-Estimation- bzw. Blind-Equalization. Das Referenzsignal wird in diesem Fall meist über eine Detektion (decision-directed) des empfangenen Signals ermittelt.

Das erfindungsgemäße Verfahren bietet den Vorteil, dass für das Schätzverfahren auf eine größere Menge von Referenzdaten zurückgriffen werden kann. So können neben den Referenzdaten des zweiten Teils des Signalintervalls auch Referenzdaten des ersten Teils des Signal verwendet werden und mit dem entsprechenden empfangenen Signal korreliert werden. Mit der Vergrößerung der Anzahl der Referenzdaten erhöht sich die Schätzgenauigkeit für die zu schätzenden Kanalparameter. Darüber hinaus wird durch das erfindungsgemäße Verfahren bei ausschließlicher Verwendung eines empfangenen Datensignals aus dem ersten Signalintervall für die Kanalschätzung ermöglicht, dass die Kanalparameter zu einem früheren Zeitpunkt zur Verfügung stehen und damit früher zur Datenrückgewinnung eingesetzt werden können als dies bei ausschließlich Verwendung einer Trainingsequenz aus dem zweiten Teil des Signalintervalls der Fall ist.

Kanalparameter im Sinne dieser Anmeldung sind dabei nicht nur als Kanalparameter im engeren Sinne, also als Parameter einer zu schätzenden Übertragungsfunktion oder Impulsantwort sowie als die Übertragungsfunktion bzw. Impulsantwort selbst, sondern auch im erweiterten Sinne als Parameter eines Signal-Entzerrers (Equalizer) oder Eingangs-Filters (Matched Filter) zu verstehen. Da die Aufgabe solcher Empfängerkomponenten die Kompensation von Kanaleinflüssen im empfangenen Signal ist, sind deren Parameter grundsätzlich aus den Kanalparametern im engeren Sinne, also der Impulsantwort des Kanals, bestimmbar.

Darüber hinaus können die Kanalparameter neben den zwingenden Einflüssen der Luftschnittstelle auch optional die Einflüsse einer oder mehrerer Sende- und/oder Empfangskomponenten beschreiben.

Vorteilhafterweise entspricht das Signalintervall, welches einen mit einem ersten Modulationsverfahren modulierten ersten Teil des Signalintervalls und einen mit einem zweiten Modulationsverfahren modulierten zweiten Teil des Signalintervalls umfasst, einem Datenburst. Bei neueren Versionen von Paket-orientierten Mobilfunkstandards bietet es sich an, die Information eines ersten Headers bzw. Access Codes zur Adressierung und Steuerung der Gegenstelle mit dem ersten Modulationsverfahren zu modulieren und so auch von solchen Empfängern, welche auf früheren Versionen des Standards basierend, rückgewinnbar zu erhalten. Ein auf einen solchen Datenburst angewendetes Verfahren zur Bestimmung der Kanalparameter des zweiten Teils des Datenbursts bietet den Vorteil, dass die so geschätzten Kanalparameter aufgrund der geringen zeitlichen Differenz zwischen dem Auftreten des die Schätzung bestimmenden Datensignals (erster Teil des Bursts) und dem Verwendungszeitpunkt (zweiter Teil des Bursts) der geschätzten Kanalparameter nur wenig von den tatsächlich Kanalverhältnissen abweichen. Wäre das Zeitintervall größer, wären auch die Abweichungen größer, da sich die Kanalverhältnisse insbesondere bei Kanälen mit schnellem Schwund (fast fading) laufend ändern.

Nach einer vorteilhaften Ausführungsform werden zunächst in einem ersten Schritt Kanalparameter bezüglich des ersten Teils des Datenbursts unter Verwendung eines empfangenen Datensignals aus dem ersten Teil des Datenbursts ermittelt. Dabei wird vorausgesetzt, dass diese in dem ersten Schritt bestimmten Kanalparameter lediglich den Modulations-unabhängigen Teil des Kanals beschreiben.

Diese Maßnahme ermöglicht es, dass die im anschließenden Schritt ermittelten Kanalparameter bezüglich des zweiten Teils des Datenbursts in einfacher Weise aus den Kanalparametern bezüglich des ersten Teils ermittelt werden können. Umfassen die zu schätzenden Kanalparameter bezüglich des zweiten Teils des Datenbursts nicht die modulations-abhängigen Anteile, so entsprechen die Sätze von Kanalparametern einander. Sollen die zu schätzenden Kanalparameter des zweiten. Teils auch die modulations-abhängigen Anteile beschreiben, können die zu schätzenden Kanalparameter des zweiten Teils des Datenbursts durch eine einfache Faltungsoperation bestimmt werden. Hierzu werden die im ersten Schritt ermittelten Kanalparameter mit der Impulsantwort der Modulations-abhängigen Komponenten des zweiten Modulationsverfahrens gefaltet.

Vorteilhafterweise kann vorgesehen sein, dass der erste Teil des Datenbursts einen Access Code und einen ersten Header und der zweite Teil des Datenbursts eine Trainingssequenz umfassen. Dies bietet die Möglichkeit, dass zur Schätzung der Kanalparameter neben der empfängerseitig bekannten Information aus dem ersten Teil auch eine Information in Form einer Trainingssequenz aus dem zweiten Teil des Datenbursts verwendet werden kann.

Nach einer ersten vorteilhaften Ausführungsform werden die Kanalparameter bezüglich des ersten Teils des Datenbursts mit Hilfe eines MMSE-Schätzverfahrens (Minimum Mean Square Error), insbesondere mit Hilfe eines MAP-LMMSE-Schätzverfahrens (MAP - Maximum a-Posteriori; LMMSE - Linear Minimum Mean Square Error), unter Verwendung des empfangenen Datensignals aus dem dem ersten Teil des Datenbursts und diesem Datensignal zugeordneter Referenzinformation geschätzt. Das verwendete Datensignal kann insbesondere auch den Access Code oder einen Teil des Access Code darstellen. Dabei ist es von Vorteil, wenn die Referenzinformation und/oder davon abhängig mehrere Ergebnisse der Rechenoperationen des MMSE- bzw. LMMSE-Schätzverfahrens bereits werkseitig im Empfänger abgespeichert ist.

Die dem Fachmann bekannten MMSE- sowie LMMSE-Verfahren basieren auf der Minimierung des mittleren quadratischen Schätzfehlers. Unter den Oberbegriff des MMSE-Schätzers fallen sowohl der ML-Schätzer (Maximum-Likelihood) als auch der MAP-Schätzer, wobei der MAP-Schätzer im Gegensatz zu dem ML-Schätzer sogenannte a-posteriori Information, also im voraus bekannte Information beispielsweise über das Kanalrauschen oder den Kanal als solchen verwendet. Im Gegensatz zum MMSE-Verfahren wird bei dem LMMSE-Verfahren zwingend ein linearer Schätzer vorausgesetzt. Zur Schätzung der Kanalparameter werden bei MMSE- oder LMMSE-Verfahren Matrizenoperationen, insbesondere Matrizeninversionen und Matrizenmultiplikationen, durchgeführt. Eine der zugrundeliegenden Matrizen ist die Autokorrelationsmatrix, deren Elemente von einer standardisierten Datensequenz abhängig sind. Neben der Referenzsequenz stellt auch die Autokorrelationsmatrix eine empfängerseitig bekannte Referenzinformation im Sinne der Erfindung dar. Zur Reduzierung des Rechenaufwands können beispielsweise das Ergebnis der Matrizeninversion der Autokorrelationsmatrix, die standardisierte Datensequenz oder Ergebnisse anderer davon abhängiger Rechenoperationen bereits im Kanalschätzer abgelegt sein.

Nach einer dazu alternativen Ausführungsform werden die Kanalparameter bezüglich des ersten Teils des Datenbursts mit Hilfe eines iterativen LMS-Schätzverfahrens (Least Mean Square) unter Verwendung des empfangenen Datensignals aus dem ersten Teil des Datenbursts und diesem Datensignal zugeordneter Referenzinformation geschätzt.

Dies bietet grundsätzlich den Vorteil, dass die Schätzung der Kanalparameter ohne Matrixinversion durchgeführt werden kann. Da beispielsweise die Information des Access Codes, welcher bei dem Schätzverfahren verwendet werden kann, gewöhnlich, insbesondere bei Bluetooth-Systemen, erst mit dem Verbindungsaufbau zur Verfügung steht, müsste bei nicht-iterativen Schätzverfahren eine Matrixinversion der Autokorrelationsmatrix während des Betriebs durchgeführt werden. Mit Hilfe des dem Fachmann bekannten iterativen LMS-Verfahren können die Kanalparameter ohne Matrixinversion ermittelt werden. Darüber hinaus wird bei iterativen Schätzverfahren wie dem LMS-Verfahren wesentlich mehr Referenzinformation benötigt, um eine ausreichende Schätzgenauigkeit zu erreichen. Die Verwendung der im Vergleich zu dem Header längeren Bitsequenz des Access Codes ist daher besonders geeignet für die Anwendung des LMS-Verfahren.

Vorteilhafterweise kann vorgesehen sein, dass zur Schätzung der Kanalparameter bezüglich des ersten Teils des Datenbursts zunächst ein Modulations-abhängiges Referenzsignal als Referenzinformation bestimmt wird. Das Modulations-abhängige Referenzsignal wird in diesem Fall durch Pulsformen entsprechend dem ersten Modulationsverfahren einer Modulations-unabhängigen Referenzsequenz ermittelt.

Grundsätzlich können die Kanalparameter, wie oben erwähnt, neben den zwingenden Einflüssen der Luftschnittstelle auch optional die Einflüsse eines oder mehrerer Sende- und/oder Empfangskomponenten beschreiben. Bei den optionalen Einflüssen ist besonders die vom Modulationsverfahren abhängige sendeseitige Pulsformung hervorzuheben. Zum Ermitteln der Kanalparameter bezüglich des mit dem zweiten Modulationsverfahren modulierten zweiten Teil des Datenburst werden zunächst die Kanalparameter bezüglich des mit dem ersten Modulationsverfahren modulierten ersten Teils des Datenbursts ermittelt. Dabei beschreiben diese zunächst bestimmten Kanalparameter lediglich den Modulations-unabhängigen Teil des Kanals. Obiges Vorgehen ermöglicht es, die Kanalparameter bezüglich des ersten Teils ohne den Einfluss der Modulation, also ohne den Einfluss der Modulations-abhängigen Pulsformung, auf direktem Wege zu berechnen. In diesem Fall wird eine Modulations-unabhängige Referenzsequenz, also eine wertediskrete Symbolsequenz, in eine Modulations-abhängige Referenzsequenz, also eine Puls-modulierte Symbolsequenz, umgewandelt. Es ist daher nicht notwendig, den Modulations-abhängigen Teil der Kanalparameter aus den Kanalparametern bezüglich des ersten Teils herauszurechnen.

Nach einer weiteren vorteilhaften Ausführungsform werden darüber hinaus zusätzliche Kanalparameter bezüglich des mit dem zweiten Modulationsverfahren modulierten zweiten Teils des Datenbursts unter Verwendung eines empfangenen Datensignals aus der Trainingssequenz und diesem Datensignal zugeordneter Referenzinformation ermittelt. Dabei ist es von Vorteil, wenn das Ermitteln der Kanalparameter bezüglich des zweiten Teils des Datenbursts unter Verwendung der zusätzlichen Kanalparameter durchgeführt wird.

Ein solches Vorgehen ermöglicht es, die Genauigkeit der Kanalschätzung weiter zu verbessern. Die Kanalschätzung ist in einem solchen Fall nicht nur von dem ersten Teil des Datenbursts abhängig.

In diesem Fall werden die Kanalparameter bezüglich des zweiten Teils des Datenbursts vorzugsweise in Abhängigkeit einer von der jeweiligen Verbindung abhängigen Auswahlgröße

a) als resultierende Kanalparameter bezüglich des ersten Teils des Datenbursts, welche sich aus der sendeseitigen Pulsformung nach dem zweiten Modulationsverfahren der ermittelten Kanalparameter bezüglich des ersten Teils des Datenbursts ergeben, oder

b) als zusätzliche Kanalparameter bezüglich des zweiten Teils des Datenbursts, wobei diese die sendeseitige Pulsformung bei dem zweiten Modulationsverfahren berücksichtigen, oder

c) als Mittelung der einzelnen resultierenden Kanalparameter und der einzelnen zusätzlichen Kanalparameter, wobei diese die sendeseitige Pulsformung bei dem zweiten Modulationsverfahren berücksichtigen,

ermittelt.

Dies bietet den Vorteil, dass die Kanalschätzung veränderten Übertragungsverhältnissen flexibel angepasst werden kann. Es ist bekannt, dass die Qualität der Kanalschätzer a) und b) von den Übertragungsverhältnissen abhängig ist. Ist die Schätzung a) basierend auf dem ersten Teil des Datenbursts besser, so wird ausschließlich diese zur Angabe der Kanalparameter verwendet. Ist hingegen die Schätzung b) basierend auf dem zweiten Teil des Datenbursts besser, so werden lediglich diese Ergebnisse für die Kanalschätzung herangezogen. Ist die Qualität beider Schätzer a) und b) vergleichbar, so kann die Qualität der Schätzung durch eine Mittelung der Ergebnisse beider Schätzer weiter verbessert werden.

Gemäß einer vorteilhaften Ausführungsform beschreibt das erste Modulationsverfahren eine GFSK-Modulation und das zweite Modulationsverfahren eine DMPSK-Modulation mit $M \geq 4$. In diesem Fall wird vorteilhafterweise der Modulationsindex der GFSK-Modulation ermittelt. Dieser stellt dann die von der jeweiligen Verbindung abhängige Auswahlgröße dar.

Diese Erweiterung des Verfahrens berücksichtigt den Einfluss des Modulationsindex der GFSK-Modulation auf die Qualität der Kanalschätzung hinsichtlich des zweiten Teils des Datenbursts. Damit wird ermöglicht, dass trotz eines besonders ungünstigen Wertes für den Modulationsindex die zu schätzenden Kanalparameter für den zweiten Teil des Datenbursts optimal und hinreichend genau bestimmt werden.

Die Erfindung wird nachfolgend anhand eines Ausführungsbeispiels unter Bezugnahme auf die Zeichnungen näher erläutert; in diesen zeigen:

Fig. 1    eine Darstellung der Struktur eines Datenbursts;

Fig. 2    eine Darstellung der Impulsantwort c(i) des Kanals;

Fig. 3a    eine Darstellung einer Implementierung der Schätzung von Kanalparametern $c_{GFSK}(i)$ bezüglich des ersten Teils des Datenbursts mit Hilfe des LMMSE-Verfahrens;

Fig. 3b    eine Darstellung einer alternativen Implementierung der Schätzung von Kanalparametern $C_{GFSK}(i)$ bezüglich des ersten Teils des Datenbursts mit Hilfe des LMS-Verfahrens; und

Fig. 4    eine Darstellung der Ermittelung der Kanalparameter c(i) in Abhängigkeit des Modulationsindex $\eta$.

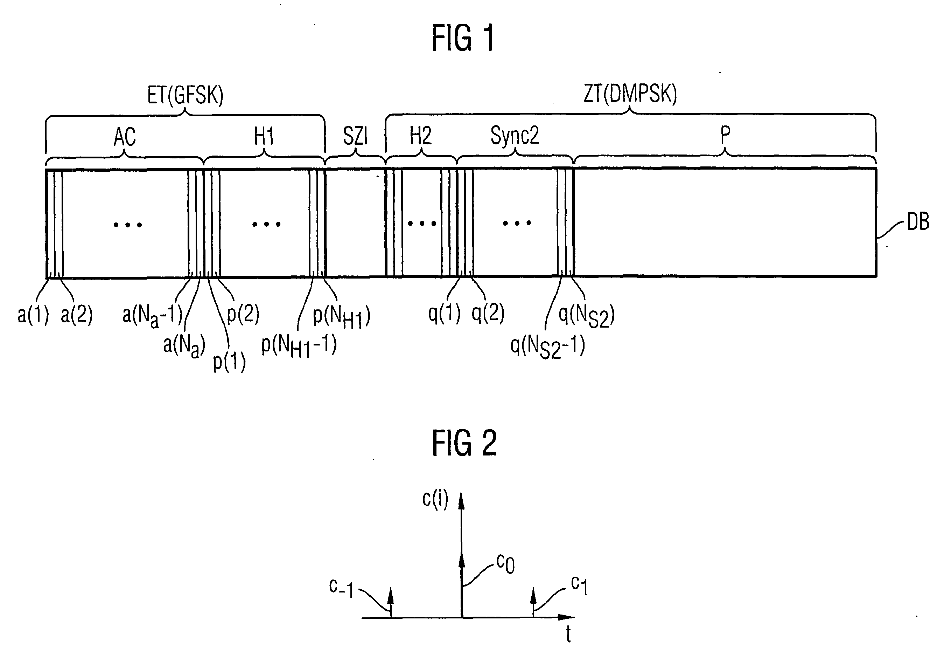

In Fig. 1 ist eine Struktur eines Datenbursts DB dargestellt, welcher in einem Bluetooth-Übertragungssystem basierend auf einem Bluetooth-Standard höher als 1.1 zwischen den Teilnehmern eines bereits eingerichteten Pico-Netzes über Funk austauschbar ist.

Der Datenburst DB bzw. das Datenpaket in Fig. 1 umfasst einen ersten Teil ET, welcher einen am Anfang angeordneten Access Code AC mit der Symbolsequenz $\{a(1), a(2),..., a(N_a-1), a(N_a)\}$ und einen daran anschließenden ersten Header H1 mit der Symbolsequenz $\{p(1), p(2),..., p(N_{H1}-1), p(N_{H1})\}$ aufweist. An den Header H1 des ersten Teils ET schließt sich optional ein Schutzzeitintervall SZI an. Des Weiteren umfasst der Datenburst DB einen zweiten Teil ZT, welcher dem Schutzzeitintervall SZI folgt. Der zweite Teil ZT weist einen zweiten Datenburstkopf bzw. einen zweiten Header H2 und daran anschließend eine Trainingssequenz Sync2 mit der Symbolfolge $\{q(1), q(2),..., q(N_{S2}-1), q(N_{S2})\}$ auf. An diese Trainingssequenz schließt sich der Nutzdatenbereich P, im englischen Sprachgebrauch auch als Payload bezeichnet, des zweiten Teils ZT an.

Zu Beginn der Übertragung des Datenpakets bzw. Datenbursts DB wird der erste Teil ET, welcher mit einem zweiwertigen GFSK-Modulationsverfahren moduliert ist, mit einer ersten Datenrate von der sendenden Funkeinheit abgestrahlt und von einer Gegenstation empfangen. Die erste Datenrate beträgt als Bluetooth-Standard-Datenrate 1 Mbit/s. Standardspezifisch werden zu Beginn des ersten Teils ET Identifizierungs- und Synchronizierungs-Informationen mittels des Access Codes AC des Pico-Netzes gesendet, danach folgt der erste Datenburstkopf H1 (Header). Der Access Code ist nach Einrichten des Pico-Netzes bekannt. Der Header H1 als weitere Komponente des ersten Teils des Bursts kann neben Adressierungsinformationen und Angaben zum verwendeten Pakettyp Informationen über eine zweite Datenrate enthalten, mit welcher der dem ersten Teil ET folgende zweite Teil ZT des Datenbursts DB übertragen werden soll. Der zweite Teil ZT wird mit höherer Datenrate als der erste Teil ET übertragen. Im Ausführungsbeispiel wird der zweite Teil ZT des Datenbursts DB mit einem zweiten Modulationsverfahren, dem eine DMPSK-Modulation mit $M \geq 4$ zugrunde liegt, übertragen. Im Fall einer DQPSK-Modulation mit vierwertigen Symbolen erfolgt die Übertragung des zweiten Teils ZT des Bursts mit der doppelten Datenrate gegenüber einer auf GFSK-Modulation basierenden Übertragung. Während der optionalen Zeitdauer des Schutzzeitintervalls SZI erfolgt keine Datenübertragung. Das Schutzzeitintervall SZI dient der sende- und empfangsseitigen Umschaltung der Modulations-abhängigen Komponenten.

Unterstützen beide Geräte der Funkverbindung die erhöhte Datenrate basierend auf der DMPSK-Modulation, kann das Umschalten von dem ersten auf das zweite Modulationsverfahren in jedem Burst vorgenommen werden. Dabei wird die Abfrage des Unterstützens der erhöhten Datenrate bereits bei dem Einrichten des Pico-Netzes durchgeführt.

Zur empfangsseitigen Rückgewinnung der in dem zweiten Teil des Datenbursts DB enthaltenen Daten (Payload) ist es im Allgemeinen notwendig, das Übertragungsverhalten des Kanals bei der DMPSK-Modulation zu kennen. Dabei wirkt sich insbesondere die sendeseitige, je nach Modulationsverfahren gewählte Pulsformung unterschiedlich auf das Übertragungsverhalten des Gesamtkanals - bestehend aus Luftschnittstelle, Sender und Empfänger - aus.

Die Modulations-abhängige Pulsformung kann durch einen linearen Puls $g_{Modulation}(i)$ charakterisiert werden. Im Fall einer Gaußschen Pulsformung erstreckt sich der Puls zeitlich über mehr als nur die Symbolzeitdauer T. Die Luftschnittstelle als Teil des Kanals weist im Allgemeinen das Verhalten eines Mehrwegekanals (Multipath-Channel) auf, das heisst das ausgesendete Signal erreicht den Empfänger über mehrere zeitlich zueinander verzögerte Wege. Das Übertragungsverhalten eines solchen Mehrwegekanals lässt sich durch seine Impulsantwort $c_{MP}(i)$ charakterisieren. Dabei kann die Impulsantwort $c_{MP}(i)$ neben der Luftschnittstelle auch weitere Teile des Kanals, insbesondere die Empfangsfilter, beschreiben.

Für die Impulsantwort des resultierenden Kanals, welcher sowohl den Mehrwegekanal als auch die sendeseitige Pulsformung umfasst, gilt:

$$c(i) = g_{Modulation}(i) * c_{MP}(i) \qquad (1).$$

In Fig. 2 ist ein beispielhafter Verlauf der Impulsantwort des resultierenden Kanals mit L = 3 Koeffizienten angegeben. Hierbei wird der Kanal durch ein Modell mit drei Koeffizienten mit

$$c_i = c(i) \text{ mit } i = -1, 0, 1 \qquad (2)$$

beschrieben.

Das empfangene Signal r(i) ergibt sich zu

$$r(i) = s(i) * c(i) + n(i) = \sum_{k=-(L-1)/2}^{(L-1)/2} s(i-k) \cdot c(k) + n(i) \qquad (3),$$

wobei s(i) das gesendete Signal, n(i) das Rauschsignal mit einer Rauschleistung $P_{noise}$ und "*" den Faltungsoperator bezeichnen.

Der naheliegendste Ansatz zur Schätzung der Kanalparameter c(i) bezüglich des zweiten Teils des Bursts besteht darin, die bekannten Trainingsdaten $q(1), q(2), ..., q(N_{S2}-1), q(N_{S2})$ der Sequenz Sync2 des zweiten Teils ZT des Bursts zur Kanalschätzung heranzuziehen. Allerdings ist die Anzahl dieser Trainingsdaten relativ gering. Aus diesem Grund kann bei einer solchen Kanalschätzung, welche allein auf obigen Trainingsdaten als empfangsseitig bekannte Referenzinformation basiert, keine sehr hohe Genauigkeit erreicht werden.

Erfindungsgemäß werden die Kanalparameter c(i) bezüglich des mit dem DMPSK modulierten Teils des Datenbursts DB unter Verwendung empfangener Daten aus dem ersten Teil des Bursts ermittelt. Dazu werden in diesem Ausführungsbeispiel zunächst die Kanalparameter $C_{MP\_GFSK}(i)$ bezüglich des ersten Teils ET bestimmt, wobei diese Kanalparameter lediglich den Modulations-unabhängigen Teil des Kanals beschreiben.

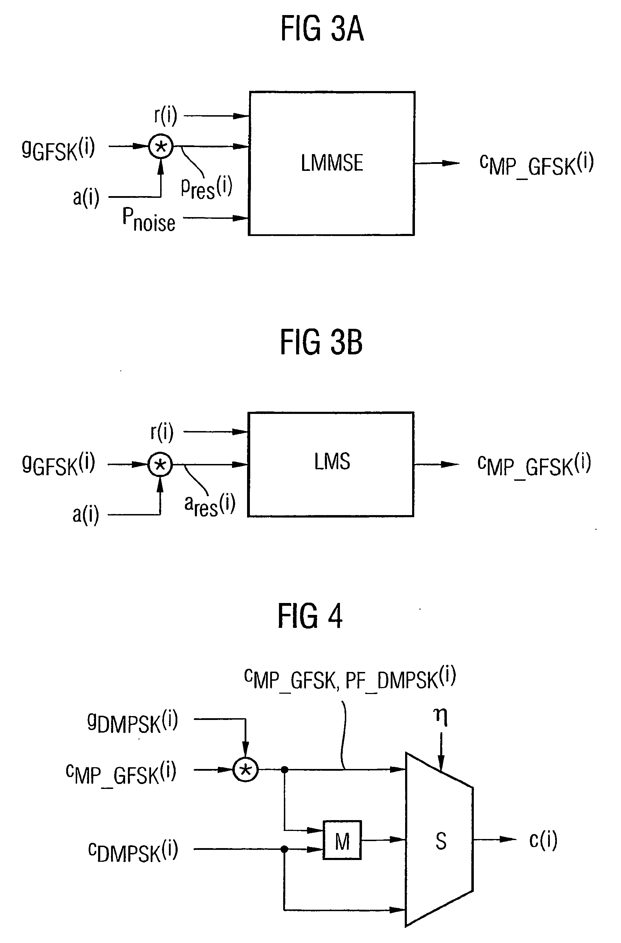

In Fig. 3a ist eine Implementierung der Schätzung der Kanalparameter $C_{MP\_GFSK}(i)$ bezüglich des ersten Teils mit Hilfe des LMMSE-Verfahrens (Linear Minimum Mean Square Error) basieren auf der Minimierung des mittleren quadratischen Schätzfehler dargestellt. Zur Schätzung werden als Eingangsgrößen das empfangene Datensignal r(i) aus einem Teil des Access Code AC und die diesem Datensignal zugeordnete Referenzsequenz a(i) verwendet. Ferner ist zur Schätzung von $C_{MP\_GFSK}$(i) die Kenntnis über den die Pulsformung beschreibenden Puls $g_{GFSK}$(i) notwendig. Darüber hinaus kann optional die Schätzung durch Einbeziehung der gemessenen Rauschleistung $P_{noise}$ verbessert werden.

In dem Lehrbuch Analyse und Entwurf digitaler Mobilfunksysteme, P. Jung, Teubner-Verlag, 1997, sind unter Kapitel 5.2.2 und 5.2.3, Seiten 197 bis 206, die Rechenschritte zur Bestimmung der Kanalimpulsantwort dargestellt. Diese Angaben werden hiermit durch Bezugnahme in den Offenbarungsgehalt dieser Schrift aufgenommen.

Allgemein lässt sich der Vektor der Koeffizienten einer gesuchten Impulsantwort $\underline{c}$ bestimmen zu:

$$\underline{c} = (c_{-(L-1)/2} \cdots c_0 \cdots c_{(L-1)/2})^T = \underline{M} \cdot \underline{r} \qquad (4),$$

wobei $\underline{M}$ die Schätzmatrix und $\underline{r} = (r_{a(min)} \ r_{a(min+1)} \cdots r_{a(max)})^T$ den Vektor des empfangenen Signals in Bezug auf eine Referenzsequenz a(i) beschreibt. Hierbei wird lediglich ein Teil des Access Codes berücksichtigt.

Für einen MMSE-Schätzer wird gefordert, dass der quadratische Schätzfehler minimal ist. Eine geeignete mögliche Schätzmatrix kann aufgrund dieser Anforderung bestimmt werden zu

$$\underline{M} = (\underline{R}^{-1} \cdot \underline{P})^{*T} \qquad (5),$$

wobei $\underline{R}$ die Autokorrelationsmatrix der empfangenen Trainingsequenz und $\underline{P}$ die Kreuzkorrelationsmatrix zwischen der empfangenen Trainingssequenz und der Impulsantwort des Kanals beschreiben. Die Autokorrelationsmatrix R ist eine Funktion der verwendeten Trainingssequenz, des Kanalrauschens und der Korrelationseigenschaften der zu schätzenden Impulsantwort. Bei der Angabe der Autokorrelationsmatrix R werden das Kanalrauschen und die Korrelationseigenschaften der zu schätzenden Impulsantwort lediglich optional zur Verbesserung der Schätzung verwendet. Diese optionalen Information stellt a-priori Schätzinformation dar. Bei der Verwendung von a-priori Schätzinformation handelt es sich also um einen MAP-Schätzer, insbesondere durch Verwendung eines linearen Schätzers um einen MAP-LMMSE-Schätzer. Die Kreuzkorrelationsmatrix P ist eine Funktion der Trainingssequenz und der Korrelationseigenschaften der zu schätzenden Impulsantwort.

Bei dem in Fig. 3a dargestellte Schätzer wird als Referenzinformation eine resultierende Referenzinformation $p_{res}$(i) gemäß

$$p_{res}(i) = g_{GFSK}(i) * p(i) \qquad (6)$$

verwendet. Dies bietet den Vorteil, dass die Kanalschätzung gemäß Fig. 3a nicht die Kanalparameter für den Kanal inklusive der GFSK-Pulsformung, sondern lediglich die Kanalparameter $C_{MP\_GFSK}$(i) ohne die GFSK-Pulsformung bestimmt. Die Schätzmatrix, die Autokorrelationsmatrix und die Kreuzkorrelationsmatrix bestimmen sich in diesem Fall analog zu Gleichung (5). Statt mit Hilfe einer Faltungsoperation lässt sich das gleiche Ergebnis durch eine der Faltung entsprechende Filterung bestimmen. Dies gilt grundsätzlich für alle in dieser Anmeldung angegebenen Faltungsoperationen.

Die Sequenz (a(min), .. , a(max)} ist eine Teilsequenz des 68 Bit umfassenden Access Codes und ist nach Verbindungsaufbau bei einem Bluetooth-spezifischen Pico-Netz bekannt. Die Bestimmung einer 64 Bit langen Synchronisationssequenz als Teil des Access Codes erfolgt in Abhängigkeit der sogenannten Netzwerk-spezifischen LAP-Adresse und ist in der Bluetooth-Spezifikation 1.1, Kapitel 13.2.1, Seiten 142 bis 145, beschrieben. Dabei weist die Synchronisationssequenz je nach Wert eines bestimmten Bits der LAP-Adresse eine erste oder eine zweite 6 Bit lange Standard-spezifische Bitsequenz am Ende der Synchronisationssequenz auf. Ferner sind in Abhängigkeit desselben Bits der LAP-Adresse auch eine erste oder eine zweite 4 Bit lange Standard-spezifische Bitsequenz am Ende des Access Codes, die sogenannten Trailer-Bits, definiert. Die bei der MAP-LMMSE-Schätzung verwendete Sequenz {a(min), .., a(max)} entspricht der sich daraus ergebenden zusammenhängenden Sequenz von 11 Bits des Access Codes, wobei zwei Permutationen der Sequenz {a(min), .., a(max)} je nach Wert des bestimmten Bits der LAP-Adresse möglich sind.

Die beiden Permutationen der Sequenz entsprechenden beiden invertierten Autokorrelationsmatrizen $\underline{R}$ und

Kreuzkorrelationsmatrizen $\underline{P}$ oder direkt die beiden Schätzmatrizen $\underline{M}$ können im Speicher des Empfängers werkseitig abgelegt sein. In diesem Fall wird für die Rauschleistung $P_{noise}$ ein bestimmter Wert angenommen, welcher dem minimal zu erwartenden Wert der Rauschleistung $P_{noise}$ entspricht. Darüber hinaus ist die Abspeicherung weiterer im Voraus berechneter Ergebnisse denkbar. In Abhängigkeit der tatsächlich auftretenden Permutation der Referenzsequenz wird jeweils eine der beiden invertierten Autokorrelationsmatrizen R und eine der beiden Kreuzkorrelationsmatrizen $\underline{P}$ bzw. Schätzmatrizen $\underline{M}$ für die Schätzung ausgewählt.

In Fig. 3b ist eine alternative Implementierung der Schätzung der Kanalparameter $c_{MP\_GFSK}(i)$ bezüglich des ersten Teils mit Hilfe des iterativen LMS-Verfahrens (Least Mean Square) basierend auf der Minimierung des mittleren quadratischen Schätzfehlers dargestellt. Zur Schätzung werden als Eingangsgrößen das empfangene Datensignal r(i) aus dem gesamten Access Code AC und die diesem Datensignal zugeordnete Referenzinformation a(i) verwendet. Ferner ist zur Schätzung von $C_{MP\_GFSK}(i)$ die Kenntnis über den die Pulsformung beschreibenden Puls $g_{GFSK}(i)$ erforderlich.

Dabei wird analog zu dem MAP-LMMSE-Schätzer als Referenzinformation für die LMS-Kanalschätzung eine resultierende Referenzinformation $a_{res}(i)$ gemäß

$$a_{res}(i) \ = \ g_{GFSK}(i) \ * \ a(i) \qquad\qquad (7)$$

verwendet.

Die gesamte Sequenz des Access Codes a(i) ist nach Einrichten des Pico-Netzes bekannt. Da die Anzahl der Permutationen einer Referenzsequenz basierend auf dem gesamten Access Code sehr groß ist, müssen auch alle Rechenoperationen des Schätzvorgangs im Empfänger durchgeführt werden, ohne auf vorher berechnete Werte zurückgreifen zu können.

Wie oben erwähnt, kann für die MAP-LMMSE-Schätzung nur ein 11 Bit großer Teil des Access Codes verwendet werden, wenn auf abgespeicherte Werte für die verwendeten Matrizen des Schätzverfahrens zurückgriffen werden soll.

Mit Hilfe des bekannten iterativen LMS-Verfahrens ist es jedoch möglich, dass die Kanalparameterschätzung ohne Matrixinversion durchgeführt wird, so dass mit geringem Rechenaufwand der gesamte Access Code AC als Referenzinformation für das Schätzverfahren herangezogen werden kann. Dabei wäre es natürlich auch denkbar, lediglich einen Teil des gesamten Access Codes für die Schätzung zu verwenden. Bei dem LMS-Verfahren wird wie bei dem MAP-LMMSE-Schätzverfahren der quadratische Fehler minimiert. Das LMS-Verfahren arbeitet nach einem iterativen Gradientenverfahren (method of the steepest descent), wobei nach einer Anzahl n von Iterationen ein minimaler quadratischer Fehler erreicht wird. Die zugehörigen Kanalparameter entsprechen dann dem Schätzergebnis. Das LMS-Verfahren ist ausführlich in dem Lehrbuch Digital Communications, J. G. Proakis, Fourth Edition, McGraw-Hill in Kapitel 11.1.2, Seiten 663 bis 666 beschrieben. Diese vorstehend genannte Textstelle wird hiermit durch Bezugnahme in den Offenbarungsgehalt dieser Schrift aufgenommen.

Über die Schätzung der Kanalparameter $c_{MP\_GFSK}(i)$ bezüglich des GFSK-modulierten ersten Teils gemäß der alternativen Ausführungsformen nach Fig. 3a oder Fig. 3b hinaus können optional zusätzliche Kanalparameter $C_{DMPSK}(i)$ bezüglich des DMPSK-modulierten zweiten Teils ZT des Datenbursts bestimmt werden. Die Ermittelung der zusätzlichen Kanalparameter $C_{DMPSK}(i)$ findet in diesem Fall unter Verwendung eines empfangenen Datensignals aus der Trainingssequenz Sync2 des zweiten Teils des Bursts und einer diesem Datensignal zugeordneter Referenzsequenz q(i) statt. Diese Referenzsequenz weist im Falle des Bluetooth-Standards eine Länge von 10 Trainingssymbolen auf. Dies entspricht bei einer DQPSK-Modulation einer Länge von 20 Bits. Da das gesamte Schätzverfahren die Bestimmung der Kanalparameter c(i) bezüglich des DMPSK-modulierten Teils inklusive der DMPSK-spezifischen sendeseitigen Pulsformung zum Ziel hat, ist es sinnvoll, dass auch die zusätzlichen Kanalparameter $C_{DMPSK}(i)$ die DMPSK-spezifische sendeseitige Pulsformung beschreiben. Die zusätzlichen Kanalparameter $C_{DMPSK}(i)$ können mit einem LMMSE- oder LMS-Verfahren entsprechend Fig. 3a bzw. 3b bestimmt werden. Dabei kann aber auf die Erzeugung eines resultierenden Referenzsignals über die Faltungsoperation verzichtet werden; die Referenzfolge {q(1)..q(N)} bildet in diesem Fall das Eingangssignal für die LMMSE- bzw. LMS-Operation.

In Fig. 4 ist die Ermittelung der Kanalparameter c(i) aus den vorher dargestellten Schätzergebnissen $C_{MP\_GFSK}(i)$ und $C_{DMPSK}(i)$ dargestellt. Die Kanalparameter $C_{MP\_GFSK}(i)$ bezüglich des GFSK-modulierten ersten Teils des Datenbursts, welche nach einem der in Fig. 3a oder Fig. 3b dargestellten Verfahren bestimmt worden sind, werden zunächst mit dem Puls $g_{DMPSK}(i)$ der bei der DMPSK-Modulation verwendeten Pulsformung gefaltet. Bei diesem Puls handelt es im Gegensatz zum Puls der GFSK-Modulation um einen sogenannten Nyquist-Puls. Das Faltungsergebnis $c_{MP\_GFSK\_PF\_DMPSK}(i)$ bildet eine Auswahloption einer nachfolgenden 3-zu-1 Auswahl-Operation S zur Angabe der gesuchten Kanalparameter c(i). Darüber hinaus stellen die zusätzlichen Kanalparameter $c_{DMPSK}(i)$ bezüglich des DMPSK-modulierten zweiten Teils ZT eine weitere Auswahloption dar. Die dritte Auswahloption ergibt sich als Mittelung M der Kanalantworten $C_{MP\_GFSK\_PF\_DMPSK}(i)$ und $C_{DMPSK}(i)$. Hierbei wird die 3-zu-1 Auswahl S über den Modulationsindex η, welcher durch Messung bekannt ist, gesteuert.

Der Grund für die Auswahl einer Kanalschätzung zur Angabe des gesuchten Schätzergebnisses ist, dass die Qualität der auf dem ersten Teil ET des Datenbursts beruhenden Kanalparameter $C_{MP\_GFSK}(i)$ von dem Modulationsindex η der GFSK-Modulation bei der jeweiligen Verbindung abhängig ist. Der Modulationsindex kann in einem gewissen Toleranzintervall schwanken. Es ist bekannt, dass für bestimmte Werte des Modulationsindex die Schätzung basierend auf dem GFSK-modulierten Teil sehr schlecht werden kann. Dies liegt daran, dass sich die Korrelationseigenschaften der jeweiligen verwendeten resultierenden Referenzsequenz in Abhängigkeit von η ändern. In einem solchen Fall werden lediglich die Kanalparameter $C_{CMPSK}(i)$ für die Angabe der gesuchten Kanalparameter c (i) herangezogen. Bei gewissen anderen Werten des Modulationsindex η ist die Schätzgenauigkeit basierend auf dem ersten Teil des Datenbursts sehr gut, so dass in diesem Fall durch die entsprechende Auswahl die Kanalparameter $C_{MP\_GFSK,\ PF\_DMPSK}(i)$ den gesuchten Kanalparametern c(i) gleichgesetzt werden können. Wenn die Genauigkeit der Kanalparameter $C_{CMPSK}(i)$ und $C_{MP\_GFSK,\ PF\_DMPSK}(i)$ vergleichbar ist, kann eine Mittelung M der Parametersätze durchgeführt werden. Durch diese Maßnahme wird bewirkt, dass das gemittelte Schätzergebnis eine geringere Schwankungsbreite als die Einzelparametersätze aufweisen und somit das gesuchte Schätzergebnis c(i) im Mittel eine höhere Genauigkeit besitzt.

Es wird abschließend darauf hingewiesen, dass es im Rahmen der Erfindung auch möglich ist, Änderungen der Übertragungscharakteristik des Empfangssignalpfads im Empfänger-Frontend, die bei der Umschaltung zwischen den verschiedenen Modulationsverfahren aufgrund der Verwendung unterschiedlicher Empfängermodule im Empfangssignalpfad auftreten, bei der Bestimmung der Kanalparameter zu berücksichtigen. Sofern die jeweiligen Übertragungscharakteristiken des Empfangssignalpfads im Empfänger-Frontend bekannt sind, können diese in analoger Weise wie die Modulations-abhängigen Pulsformen bei der Berechnung der Kanalparameter bezüglich des mit dem DMPSK-Modulationsverfahren modulierten zweiten Teils des Datenbursts verwendet werden.

**Patentansprüche**

1. Verfahren zur Bestimmung von Kanalparametern in einem Mobilfunkempfänger bezüglich eines zweiten Teils eines Signalintervalls, wobei das Signalintervall einen mit einem ersten Modulationsverfahren modulierten ersten Teil (ET) des Signalintervalls und einen mit einem zweiten Modulationsverfahren modulierten zweiten Teil (ZT) des Signalintervalls umfasst, wobei der erste Teil (ET) und der zweite Teil (ZT) mit unterschiedlichen Pulsformen gefiltert sind, mit dem Schritt:

   - Ermitteln der Kanalparameter (c(i)) bezüglich des mit dem zweiten Modulationsverfahren modulierten zweiten Teils (ZT) des Signalintervalls aus pulsformunabhäng geschätzten Kanalparametern des ersten Teils (ET) des Signalintervals unter Verwendung der Pulsform des zweiten Teils (ZT) des Signalintervalls.

2. Verfahren nach Anspruch 1,
   **dadurch gekennzeichnet,**
   **dass** das Signalintervall einem Datenburst (DB) entspricht.

3. Verfahren nach Anspruch 2,
   **gekennzeichnet durch** den Schritt:

   - Ermitteln von Kanalparametern ($C_{MP\_GFSK}(i)$) bezüglich des ersten Teils (ET) des Datenbursts (DB) unter Verwendung eines empfangenen Datensignals aus dem ersten Teil (ET) des Datenbursts (DB), wobei diese Kanalparameter ($C_{MP\_GFSK}(i)$) lediglich den modulations unabhängigen Teil des Kanals beschreiben.

4. Verfahren nach Anspruch 3,
   **dadurch gekennzeichnet,**
   **dass** der erste Teil (ET) des Datenbursts (DB) einen Access Code (AC) und einen ersten Header (H1) und der zweite Teil (ZT) des Datenbursts (DB) eine Trainingssequenz (Sync2) umfassen.

5. Verfahren nach Anspruch 4,
   **dadurch gekennzeichnet,**
   **dass** die Kanalparameter ($c_{MP\_GFSK}(i)$) bezüglich des ersten Teils des Datenbursts (DB) mit Hilfe eines MMSE-Schätzverfahrens, insbesondere eines MAP-LMMSE-Schätzverfahrens, unter Verwendung des empfangenen Datensignals aus dem ersten Teil (ET) des Datenbursts und diesem Datensignal zugeordneter Referenzinformation ($a(i)$, $a_{res}(i)$) geschätzt werden.

**6.** Verfahren nach Anspruch 5,
**dadurch gekennzeichnet,**
**dass** die Referenzinformation ($a(i)$, $a_{res}(i)$) und/oder davon abhängig mehrere Ergebnisse der Rechenoperationen des MMSE- bzw. LMMSE-Schätzverfahrens bereits werkseitig im Empfänger abgespeichert sind.

**7.** Verfahren nach Anspruch 4,
**dadurch gekennzeichnet,**
**dass** die Kanalparämeter ($C_{MP\_GFSK}(i)$) bezüglich des ersten Teils des Datenbursts (DB) mit Hilfe eines iterativen LMS-Schätzverfahrens unter Verwendung des empfangenen Datensignals aus dem ersten Teil (ET) des Datenbursts und diesem Datensignal zugeordneter Referenzinformation ($a(i)$, $a_{res}(i)$) geschätzt werden.

**8.** Verfahren nach einem der Ansprüche 5 bis 7, **gekennzeichnet durch** den Schritt:

- Bestimmen eines modulations abhängigen Referenzsignals ($a_{res}(i)$) als Referenzinformation **durch** Pulsformen einer Modulations-unabhängigen Referenzsequenz ($a(i)$) nach dem ersten Modulationsverfahren.

**9.** Verfahren nach einem der Ansprüche 4 bis 8,
**gekennzeichnet durch** den Schritt:

- Ermitteln von zusätzlichen Kanalparametern ($c_{DMPSK}(i)$) bezüglich des mit dem zweiten Modulationsverfahren modulierten zweiten Teils (ZT) des Datenbursts (DB) unter Verwendung eines empfangenen Datensignals aus der Trainingssequenz (Sync2) und diesem Datensignal zugeordneter Referenzinformation ($q(i)$).

**10.** Verfahren nach Anspruch 9,
**dadurch gekennzeichnet,**
**dass** das Ermitteln der Kanalparameter ($c(i)$) bezüglich des zweiten Teils (ZT) des Datenbursts (DB) unter Verwendung der zusätzlichen Kanalparameter ($C_{DMPSK}(i)$) durchgeführt wird.

**11.** Verfahren nach Anspruch 10,
**dadurch gekennzeichnet,**
**dass** die Kanalparameter ($c(i)$) bezüglich des zweiten Teils (ZT) des Datenbursts (DB) in Abhängigkeit einer von der jeweiligen Verbindung abhängigen Auswahlgröße

- als resultierende Kanalparameter ($C_{MP\_GFSK,PF\_DMPSK}(i)$) bezüglich des ersten Teils (ZT) des Datenbursts (DB), welche sich aus der sendeseitigen Pulsformung nach dem zweiten Modulationsverfahren der ermittelten Kanalparameter ($C_{MP\_GFSK}(i)$) bezüglich des ersten Teils (ET) des Datenbursts (DB) ergeben, oder
- als zusätzliche Kanalparameter ($c_{DMPSK}(i)$) bezüglich des zweiten Teils (ZT) des Datenbursts (DB), wobei diese die sendeseitige Pulsformung bei dem zweiten Modulationsverfahren berücksichtigen, oder
- als Mittelung der einzelnen resultierenden Kanalparameter ($c_{MP\_GFSK, PF\_DMPSK}(i)$) und der einzelnen zusätzlichen Kanalparameter ($c_{DMPSK}(i)$) wobei diese die sendeseitige Pulsformung bei dem zweiten Modulationsverfahren berücksichtigen,

ermittelt werden.

**12.** Verfahren nach einem der vorhergehenden Ansprüche,
**dadurch gekennzeichnet,**
**dass** das erste Modulationsverfahren eine GFSK-Modulation und das zweite Modulationsverfahren eine DMPSK-Modulation mit $M \geq 4$ beschreibt.

**13.** Verfahren nach Anspruch 11 und 12,
**dadurch gekennzeichnet,**
**dass** das Verfahren den zusätzlichen Verfahrensschritt

- Ermitteln des Modulationsindex ($\eta$) der GFSK-Modulation aufweist und die von der jeweiligen Verbindung abhängige Auswahlgröße der Modulationsindex ($\eta$) ist.

**14.** Verfahren nach einem der vorhergehenden Ansprüche,
**dadurch gekennzeichnet,**

**dass** das Verfahren in einem Bluetooth-Übertragungssystem basierend auf einem Bluetooth-Standard Version 1.2 oder höher eingesetzt wird.

**Claims**

1. Method for determination of channel parameters in a mobile radio receiver relating to a second part of a signal interval, with the signal interval comprising a first part (ET) which is modulated using a first modulation method of the signal interval and a second part (ZT) which is modulated using a second modulation method of the signal interval, with the first part (ET) and the second part (ZT) being filtered using different pulse shapes, having the following step:

   - determination of the channel parameters (c(i)) relating to the second part (ZT) which is modulated using the second modulation method of the signal interval from channel parameters, which are estimated independently of the pulse shape, of the first part (ET) of the signal interval, using the pulse shape of the second part (ZT) of the signal interval.

2. The method as claimed in claim 1,
   **characterized**
   **in that** the signal interval corresponds to a data burst (DB).

3. The method as claimed in claim 2,
   **characterized by** the following step:

   - determination of channel parameters ($C_{MP\_GFSK}$(i)) relating to the first part (ET) of the data burst (DB) using a received data signal from the first part (ET) of the data burst (DB), with these channel parameters ($c_{MP\_GFSK}$(i)) describing only the modulation-independent part of the channel.

4. The method as claimed in claim 3,
   **characterized**
   **in that** the first part (ET) of the data burst (DB) comprises an access code (AC) and a first header (H1), and the second part (ZT) of the data burst (DB) comprises a training sequence (Sync2).

5. The method as claimed in claim 4,
   **characterized in that** the channel parameters ($C_{MP\_GFSK}$(i)) relating to the first part of the data burst (DB) are estimated with the aid of an MMSE estimation method, in particular an MAP-LMMSE estimation method, using the received data signal from the first part (ET) of the data burst and reference information (a(i), $a_{res}$(i)) which is associated with this data signal.

6. The method as claimed in claim 5,
   **characterized**
   **in that** the reference information (a(i), $a_{res}$(i)) and/or, depending on this, a plurality of results of the computation operations of the MMSE or LMMSE estimation method are actually stored in the receiver at the factory.

7. The method as claimed in claim 4,
   **characterized**
   **in that** the channel parameters ($C_{MP\_GFSK}$(i)) relating to the first part of the data burst (DB) are estimated with the aid of an iterative LMS estimation method using the received data signal from the first part (ET) of the data burst and reference information (a(i), $a_{res}$(i)) which is associated with this data signal.

8. The method as claimed in one of claims 5 to 7,
   **characterized by** the following step:

   - determination of a modulation-dependent reference signal ($a_{res}$(i)) as reference information by pulse-shaping of a modulation-independent reference sequence (a(i)) using the first modulation method.

9. The method as claimed in one of claims 4 to 8,
   **characterized by** the following step:

- determination of additional channel parameters ($C_{DMPSK}(i)$) relating to the second part (ZT) which is modulated using the second modulation method of the data burst (DB) using a received data signal from the training sequence (Sync2) and reference information ($q(i)$) which is associated with this data signal.

**10.** The method as claimed in claim 9,
**characterized**
**in that** the determination of the channel parameters ($c(i)$) relating to the second part (ZT) of the data burst (DB) is carried out using the additional channel parameters ($C_{DMPSK}(i)$).

**11.** The method as claimed in claim 10,
**characterized**
**in that** the channel parameters ($c(i)$) relating to the second part (ZT) of the data burst (DB) are determined as a function of a selection variable, which is dependent on the respective connection,

- as resultant channel parameters ($c_{MP\_GFSK,PF\_DMPSK}(i)$) relating to the first part (ZT) of the data burst (DB) which are obtained from the transmission-end pulse-shaping using the second modulation method of the determined channel parameters ($C_{MP\_GFSK}(i)$) relating to the first part (ET) of the data burst (DB), or
- as additional channel parameters ($C_{DMPSK}(i)$) relating to the second part (ZT) of the data burst (DB), with these channel parameters ($C_{DMPSK}(i)$) taking account of the transmission-end pulse-shaping in the second modulation method, or
- as averaging of the individual resultant channel parameters ($C_{MP\_GFSK, PF\_DMPSK}(i)$) and of the individual additional channel parameters ($C_{DMPSK}(i)$), in which case these take account of the transmission-end pulse-shaping in the second modulation method.

**12.** The method as claimed in one of the preceding claims,
**characterized**
**in that** the first modulation method describes GFSK modulation, and the second modulation method describes DMPSK modulation with $M \geq 4$.

**13.** The method as claimed in claims 11 and 12,
**characterized**
**in that** the method has the additional method step of

- determination of the modulation index ($\eta$) of the GFSK modulation and is the selection variable (which is dependent on the respective connection) of the modulation index ($\eta$).

**14.** The method as claimed in one of the preceding claims,
**characterized**
**in that** the method is used in a Bluetooth transmission system based on a Bluetooth Standard Version 1.2 or higher.

**Revendications**

**1.** Procédé de détermination de paramètres de canal dans un récepteur de radiotéléphonie mobile concernant une deuxième partie d'un intervalle de temps de signaux, l'intervalle de temps de signaux comprenant une première partie (ET) de l'intervalle de temps de signaux modulée avec un premier procédé de modulation et une deuxième partie (ZT) de l'intervalle de temps de signaux modulée avec un deuxième procédé de modulation, la première partie (ET) et la deuxième partie (ZT) étant filtrées avec différentes formes d'impulsions, comprenant l'étape :

- détermination des paramètres de canal ($c(i)$) concernant la deuxième partie (ZT) de l'intervalle de temps de signaux modulée avec le deuxième procédé de modulation, à partir de paramètres de canal estimés, indépendants de la forme d'impulsions, de la première partie (ET) de l'intervalle de temps de signaux, en utilisant la forme d'impulsions de la deuxième partie (ZT) de l'intervalle de temps de signaux

**2.** Procédé selon la revendication 1,
**caractérisé en ce que**
l'intervalle de temps de signaux correspond à un paquet de données (DB).

**3.** Procédé selon la revendication 2,
**caractérisé par** l'étape :

- détermination de paramètres de canal ($C_{MP\_GFSK}(i)$) concernant la première partie (ET) du flux de données (DB), en utilisant un signal de données réceptionné à partie de la première partie (ET) du paquet de données (DB), ces paramètres de canal ($C_{MP\_GFSK}(i)$) décrivant uniquement la partie du canal qui est indépendante de la modulation.

**4.** Procédé selon la revendication 3,
**caractérisé en ce que**
la première partie (ET) du paquet de données comporte un Access Code (AC) et un premier Header (H1) et que la deuxième partie (ZT) du paquet de données (DB) comporte une séquence d'apprentissage (Sync2).

**5.** Procédé selon la revendication 4,
**caractérisé en ce que**
on estime les paramètres de canal ($C_{MP\_GFSK}(i)$ concernant la première partie du paquet de données (DB) à l'aide d'un procédé d'estimation MAP-LMMSE, en utilisant le signal de données réceptionné à partir de la première partie (ET) du paquet de données et une information de référence ($a(i)$, $a_{reS}(i)$) affectée à ce signal de données.

**6.** Procédé selon la revendication 5,
**caractérisé en ce que**
l'information de référence ($a(i)$, $a_{reS}(i)$) et/ou plusieurs résultats qui en dépendent de l'opération de calcul du procédé d'évaluation MMSE, respectivement LMMSE sont déjà mémorisées d'usine dans le récepteur.

**7.** Procédé selon la revendication 4,
**caractérisé en ce que**
on estime les paramètres de canal ($C_{MP\_GFSK}(1)$) concernant la première partie du paquet de données (DB) à l'aide d'un procédé d'estimation itératif, en utilisant le signal de données réceptionné à partir de la première partie (ET) du paquet de données et une information de référence ($a(i)$, $a_{res}(1)$) affectée à ce signal de données.

**8.** Procédé selon l'une quelconque des revendications 5 à 7, **caractérisé par** l'étape :

- détermination d'un signal de référence dépendant de la modulation ($a_{res}(i)$) en tant qu'information de référence, par des formes d'impulsions d'une séquence de référence ($a(i)$) indépendante de la modulation, selon le premier procédé de modulation.

**9.** Procédé selon l'une quelconque des revendications 4 à 8, **caractérisé par** l'étape :

- détermination de paramètres de canal supplémentaires ($C_{DMPSK}(i)$) concernant la deuxième partie (ZT) du paquet de données (DB) modulée avec le deuxième procédé de modulation, en utilisant un signal de données réceptionné à partir d'une séquence d'apprentissage (Sync2) et l'information de référence ($q(i)$) affectée à ce signal de données.

**10.** Procédé selon la revendication 9,
**caractérisé en ce que**
on procède à la détermination des paramètres de canal ($c(i)$) concernant la deuxième partie (ZT) du paquet de données (DB) en utilisant les paramètres de canal supplémentaires ($C_{DMPSK}(i)$).

**11.** Procédé selon la revendication 10,
**caractérisé en ce que**
on détermine les paramètres de canal ($c(i)$) concernant la deuxième partie (ZT) du paquet de données (DB) en fonction d'une grandeur de sélection dépendant de la liaison concernée

- en tant que paramètres de canal résultants ($C_{MP\_GFSK}$, $P_{F\_DMPSK}(i)$) concernant la première partie (ZT) du flux de données (DB), qui résultent de la conformation d'impulsions côté émetteur selon le deuxième procédé de modulation des paramètres de canal déterminés ($C_{MP\_G_{FSK}}(1)$) concernant la première partie (ET) du flux de données (DB), ou
- en tant que paramètres supplémentaires du canal ($C_{DMPSK}(1)$) concernant la deuxième partie (ZT) du flux de données (DB), ces derniers prenant en considération la conformation d'impulsions côté émetteur lors du deuxième procédé de modulation, ou
- en tant que moyenne des paramètres de canal individuels résultants ($C_{MP\_GFSK,PF\_DMPSK}(i)$ et des paramètres de canal individuels supplémentaires ($C_{DMPSK}(1)$), ces derniers prenant en considération la conformation d'impulsions côté émetteur lors du deuxième procédé de modulation.

**12.** Procédé selon l'une quelconque des revendications précédentes, **caractérisé en ce que** le premier procédé de modulation décrit une modulation GFSK et le deuxième procédé de modulation décrit une modulation DMPSK, avec M ≥ 4.

**13.** Procédé selon la revendication 11 et 12,
**caractérisé en ce que**
le procédé comporte l'étape de procédé supplémentaire

- détermination de l'indice de modulation ($\eta$) de la modulation GFSK et **en ce que** la grandeur de sélection dépendant de la liaison concernée est l'indice de modulation ($\eta$).

**14.** Procédé selon l'une quelconque des revendications précédentes, **caractérisé en ce que** on utilise le procédé dans un système de transmission Bluetooth, basé sur une version standard Bluetooth 1.2 ou plus élevée.

EP 1 673 912 B1

# FIG 1

# FIG 2

# FIG 3A

LMMSE

$r(i)$
$g_{GFSK}(i)$ ✳ $p_{res}(i)$
$a(i)$
$P_{noise}$

$c_{MP\_GFSK}(i)$

# FIG 3B

LMS

$r(i)$
$g_{GFSK}(i)$ ✳
$a(i)$ $a_{res}(i)$

$c_{MP\_GFSK}(i)$

# FIG 4

$c_{MP\_GFSK,\ PF\_DMPSK}(i)$

$g_{DMPSK}(i)$
$c_{MP\_GFSK}(i)$ ✳
$c_{DMPSK}(i)$

$\eta$

M

S

$c(i)$